# EUROPÄISCHE PATENTSCHRIFT

(11) **EP 0 962 669 B1**
(45) Veröffentlichungstag und Bekanntmachung des Hinweises auf die Patenterteilung: **22.09.2004**
(21) Anmeldenummer: 99109402.0
(22) Anmeldetag: 10.05.1999
(51) Int. Cl.: F16C 13/02

(54) **Durchbiegungseinstellwalze**
Deflection compensation roll
Rouleau avec compensation de la déflection

(30) Priorität: 16.05.1998 DE 19822145
(43) Veröffentlichungstag der Anmeldung: 08.12.1999
(73) Patentinhaber: Voith Paper Patent GmbH, 89522 Heidenheim (DE)
(72) Erfinder: Van Haag, Rolf, Dr.-Ing., 47647 Kerken (DE); Wenzel, Reinhard, 47809 Krefeld (DE)
(74) Vertreter: Knoblauch, Andreas, Dr.-Ing.

(56) Entgegenhaltungen:
- DE-A- 3 902 907
- DE-A- 4 042 365
- DE-U- 9 218 151
- FR-A- 2 287 615
- US-A- 4 092 048

## Beschreibung

Die Erfindung betrifft eine Durchbiegungseinstellwalze mit einem Walzenmantel, der über als Radiallager ausgebildete Wälzlager drehbar auf einem Querhaupt abgestützt ist, wobei in Axialrichtung eine hydrostatische Lageranordnung wirkt.

Eine derartige Walze ist aus DE 40 42 365 A1 bekannt. Der Walzenmantel ist über Pendelrollenlager auf dem Querhaupt abgestützt. Um die von den Zapfenauflagekräften einer Gegenwalze herrührenden Drehmomente auszugleichen, sind an der Walze Einrichtungen zur Erzeugung eines Drehmoments vorgesehen, deren Achse senkrecht zur Pressenebene steht. Diese Einrichtungen sind an den axialen Enden der Walze angeordnet und mit hydrostatischen Lagerungen versehen.

Derartige Walzen werden vielfach in Kalandern eingesetzt, die zum Bearbeiten einer Materialbahn dienen. Insbesondere finden derartige Walzen Einsatz in Papierkalandern.

Zwischen dem Querhaupt, das auch als Träger bezeichnet werden kann, und dem Walzenmantel sind in der Regel stempelartige Stützelemente angeordnet. Wenn diese Stützelemente unter Druck gesetzt werden, können sie einer Durchbiegung des Walzenmantels entgegenwirken. Dafür nimmt man in Kauf, daß sich das Querhaupt etwas durchbiegt. In einer alternativen Ausgestaltung kann man auch die eine Hälfte des Innenraums des Walzenmantels mit einer Hydraulikflüssigkeit füllen, die unter Druck gesetzt ist. Durch eine Verringerung des Drucks im Bereich der Stempel kann man ebenfalls eine gezielte Druck- bzw. Kraftbeaufschlagung der Walze erzielen. Auch hier besteht aber die Gefahr, daß sich das Querhaupt gegenüber dem Walzenmantel etwas verbiegt. In beiden Fällen ergibt sich also eine kleine, aber nicht mehr zu vernachlässigende Neigung des Querhaupts gegenüber dem Walzenmantel im Bereich der Wälzlager.

Man verwendet aus diesem Grund zumindest an einem Ende des Walzenmantels ein Pendelrollenlager. Da sich hierbei der Außenring mit dem Walzenmantel dreht, ergeben sich aufgrund der wechselnden Belastung des Mantels hohe Reibungen. Diese führen zu einem gewissen Verschleiß und zu einer verminderten Lebensdauer.

Die zur Verfügung stehenden Lagerarten sind begrenzt, weil man bei der Walzenlagerung eine Seite mit einem Festlager und die andere Seite mit einem Loslager ausrüsten muß.

Der Erfindung liegt die Aufgabe zugrunde, die Walzenlagerung auch für andere Lager einsatzbereit zu machen.

Diese Aufgabe wird bei einer Durchbiegungseinstellwalze der eingangs genannten Art dadurch gelöst, daß die hydrostatische Lageranordnung axial innen neben einem oder bei den Wälzlagern angeordnet ist und nur sie die axialen Kräfte aufnimmt.

Man entkoppelt auf diese Weise die radiale Lagerung von der axialen Lagerung. Man kann also für die Wälzlager Lagerarten verwenden, die nur radiale Kräfte, nicht jedoch axiale Kräfte aufnehmen können. Die axialen Kräfte werden nämlich vollständig von der hydrostatischen Lageranordnung aufgenommen. Unter diesen Voraussetzungen kann man auch Rollenlager mit balligen, länglichen Wälzkörpern zwischen Innenring und Außenring verwenden, bei denen der Profilradius wesentlich größer als der für Tonnen- oder Pendelrollenlager ist und bei denen die Laufbahnen auf Innenring und Außenring einen entsprechend großen Laufbahnradius haben. Derartige Lager werden beispielsweise unter der Bezeichnung CARB-Rollenlager von der Firma SKF angeboten (Firmendruckschrift SKF: Das CARB-Rollenlager - Die bessere Lösung z.B. bei Trockenzylindern auf der Führerseite). Derartige Lager lassen relativ große Neigungswinkel und auch relativ große axiale Verschiebungen zwischen Innenring und Außenring zu. Sie sind aber nicht in der Lage, als Festlager zu wirken. Die Aufgabe der axialen Abstützung wird, wie gesagt, von der hydrostatischen Lageranordnung übernommen. Da eine hydrostatische Lageranordnung relativ wenig Reibungsverluste erzeugt und auch relativ verschleißfrei arbeitet, kann man damit die Lebensdauer der Radiallager und der Axiallager einander anpassen.

Vorzugsweise weist die Lageranordnung eine erste axialgerichtete Stützfläche, die mit einer Kolben-Zylinder-Anordnung zusammenwirkt, und eine entgegengesetzt gerichtete zweite Stützfläche auf, die mit einem Stützschuh zusammenwirkt, der gegenüber dem Querhaupt in Axialrichtung festgelegt ist. Die beiden Stützflächen werden also von der Kolben-Zylinder-Anordnung und dem Stützschuh zangenartig umfaßt und festgehalten. Hierbei kann die Kolben-Zylinder-Anordnung verwendet werden, um axiale Bewegungen des Walzenmantels nachzustellen, so daß sichergestellt ist, daß immer beide Stützflächen und ihre entsprechenden Gegenelemente aneinander anliegen. Natürlich muß der axiale Stellweg der Kolben-Zylinder-Anordnung so ausgelegt sein, daß er, falls erforderlich, die entsprechenden Längenänderungen des Walzenmantels mitmachen und damit ausgleichen kann.

Diese lassen sich jedoch im vorhinein mit ausreichender Genauigkeit abschätzen oder errechnen.

Vorzugsweise weist die Kolben-Zylinder-Anordnung einen Ringkolben auf, der das Querhaupt umgibt. Der Ringkolben hat den Vorteil, daß die Druckkräfte in Umfangsrichtung praktisch überall gleichförmig verteilt vorhanden sind, so daß sich bei einer Drehung des Walzenmantels keine periodischen Änderungen ergeben, die zu einer Schwingung oder anderen Erscheinung führen könnten.

Mit Vorteil weisen der Kolben und der Stützschuh Lagertaschen auf, die mit der gleichen Druckquelle in Verbindung stehen. Da beide Lagertaschen von entgegengesetzten Seiten auf den Walzenmantel oder damit verbundene Teile, an denen die Stützflächen angeordnet sind, wirken, ist auf diese Weise sichergestellt, daß in Axialrichtung immer ein Kräftegleichgewicht zwischen dem Walzenmantel und dem Querhaupt besteht. Dies gilt insbesondere dann, wenn die Lagertaschen die gleiche Wirkfläche haben und sie mit dem gleichen Drosselwiderstand in ihrer Zuführleitung versehen sind. Wenn sich die Drosselwiderstände stark unterscheiden, beispielsweise aufgrund von unterschiedlichen Leitungslängen, dann kann man einen entsprechenden Ausgleich auch über die wirksame Fläche der Lagertaschen schaffen.

Mit Vorteil sind die Stützflächen am Walzenmantel und die Kolben-Zylinder-Anordnung und der Stützschuh am Querhaupt angeordnet. Dies erleichtert die Führung der Hydraulikflüssigkeit, die nur einem stationären Teil, nämlich dem Querhaupt, zugeführt werden muß.

Vorzugsweise weist die Lageranordnung eine auf beiden axialen Seiten beaufschlagte Scheibe auf. Diese Scheibe ist mit dem Walzenmantel verbunden und wird von der Lageranordnung zangenartig umfaßt. Das Wälzlager, das dieser hydrostatischen Lageranordnung benachbart ist, ist damit das Festlager. Das andere Lager ist das Loslager.

In einer alternativen Ausgestaltung kann die Lageranordnung an einem Walzenende eine erste Ringscheibe und am anderen Walzenende eine zweite Ringscheibe aufweisen, die mit dem Kolben beziehungsweise dem Stützschuh zusammenwirken. Auch in diesem Fall erfolgt eine zangenartige Einfassung des Walzenmantels, wobei die Zangenbacken etwa so weit auseinanderliegen, wie die wirksame Arbeitsbreite des Walzenmantels ist.

Hierbei ist besonders bevorzugt, daß der Kolben und der Stützschuh axial von außen auf die Ringscheiben wirken. In diesem Fall bleibt nämlich der axiale Innenraum des Walzenmantels frei für die zum Durchbiegungsausgleich notwendigen Einbauteile, beispielsweise hydrostatische Stützschuhe. Wenn die hydrostatische Axiallageranordnung in die beiden Teile aufgeteilt ist, die den Wälzlagern benachbart angeordnet werden, dann muß natürlich der Kolben in der Kolben-Zylinder-Anordnung einen etwas größeren Weg zurücklegen können, weil er größere Längenunterschiede des Walzenmantels ausgleichen muß. In diesem Fall ist das Radiallager, an dem der Stützschuh angeordnet ist, das Festlager und das Radiallager, an dem die Kolben-Zylinder-Anordnung angeordnet ist, das Loslager.

Hierbei ist besonders bevorzugt, daß die Ringscheiben zusammen mit dem Stützschuh beziehungsweise der Kolben-Zylinder-Anordnung eine Axialdichtung bilden. Eine derartige Axialdichtung ist erforderlich, wenn der Innenraum des Walzenmantel unter einen hydraulischen Druck gesetzt werden soll. Zwischen den Ringscheiben und dem Walzenmantel ist eine Dichtung relativ problemlos zu erzielen. Das gleiche gilt für eine Dichtung zwischen dem Stützschuh beziehungsweise der Kolben-Zylinder-Anordnung und dem Querhaupt. Die Abdichtung zwischen den bewegten Flächen, nämlich zwischen der einen Ringscheibe und dem Stützschuh einerseits und der Kolben-Zylinder-Anordnung und der anderen Stützscheibe andererseits läßt sich ebenfalls relativ gut beherrschen, weil an diesen Berührungsflächen ohnehin der hydrostatische Druck der Lagertaschen vorliegt. Dieser führt zwar zu einem gewissen Austritt der Hydraulikflüssigkeit radial nach außen. Er läßt aber keinen Druck aus dem Innenraum des Walzenmantels entweichen.

Mit Vorteil sind der Stützschuh und/oder die Kolben-Zylinder-Anordnung gegenüber dem Querhaupt kippbeweglich. Damit wird sichergestellt, daß man trotz einer gewissen Durchbiegung des Querhauptes immer eine planparallele Anlage von Stützschuh beziehungsweise Kolben-Zylinder-Anordnung an den Ringscheiben beziehungsweise der Scheibe erzielen kann. Eine derartige kippbewegliche Lagerung läßt sich beispielsweise dadurch erreichen, daß man den Stützschuh in einer axialgerichteten Kugelkalotte abstützt oder zuläßt, daß sich der Kolben gegenüber dem Zylinder etwas schief stellt.

Die Erfindung wird im folgenden anhand von bevorzugten Ausführungsbeispielen in Verbindung mit der Zeichnung näher beschrieben. Darin zeigen:
- Fig. 1: eine erste Ausgestaltung einer Durchbiegungseinstellwalze mit einer Ausschnittsvergrößerung,
- Fig. 2: eine zweite Ausgestaltung einer Durchbiegungseinstellwalze mit einer Ausschnittsvergrößerung,
- Fig. 3: eine dritte Ausgestaltung einer Durchbiegungseinstellwalze mit Mantelhub und
- Fig. 4: eine vierte Ausgestaltung einer Durchbiegungseinstellwalze mit Mantelhub und Ausschnittsvergrößerung.

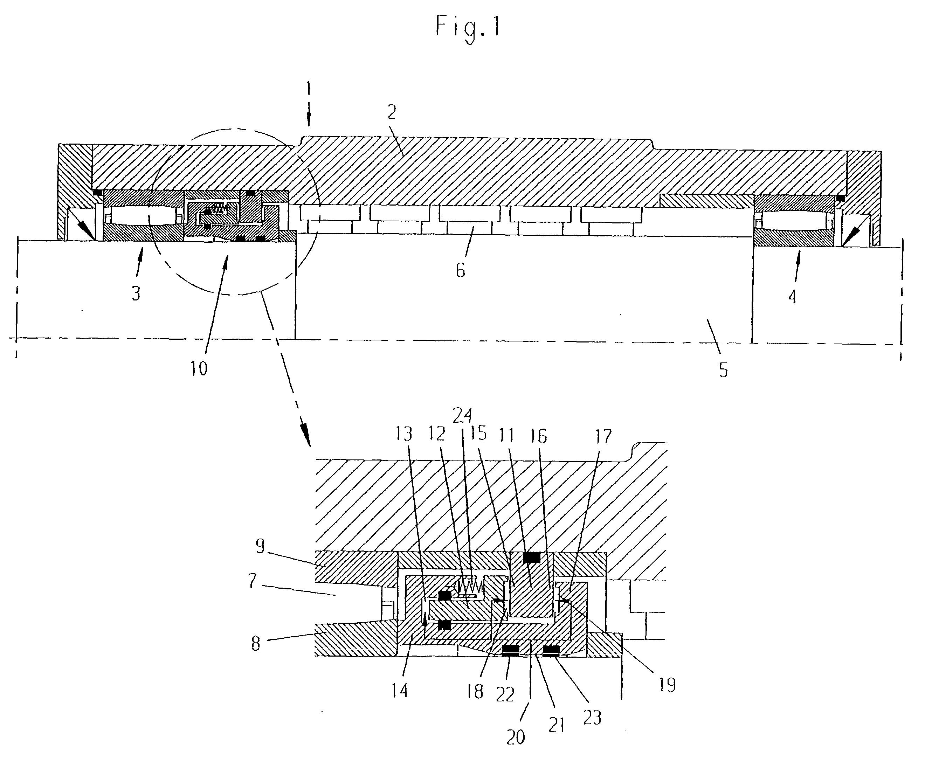

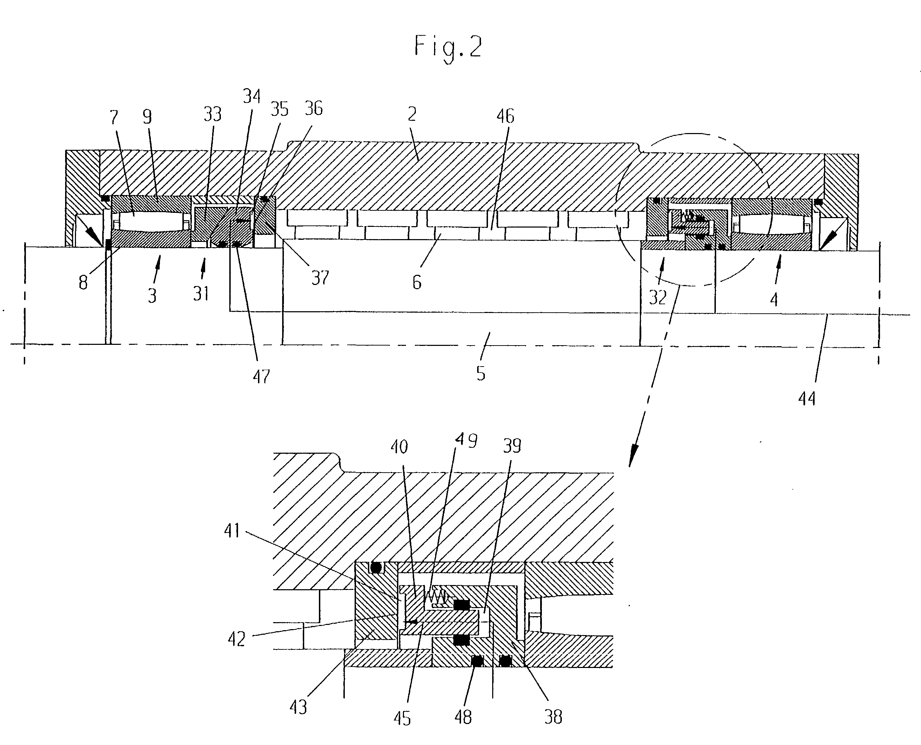

Die Fig. 1 und 2 zeigen schematisch den Längsschnitt einer Hälfte einer Durchbiegungseinstellwalze 1 mit einem Walzenmantel 2, der über Wälzlager 3, 4 auf einem umdrehbaren Querhaupt 5 drehbar gelagert ist.

Zwischen dem Walzenmantel 2 und dem Querhaupt 5 sind Stützelemente 6 angeordnet, die beispielsweise als hydrostatische Stützelemente ausgebildet sein können. Wenn der Walzenmantel 2 im Betrieb, beispielsweise bei der Satinage einer Papierbahn, belastet wird und sich aufgrund der Belastung durchbiegen möchte, kann man diesem Durchbiegen mit Hilfe der Stützelemente 6 entgegenwirken. Hierbei wird die Kraft in das Querhaupt 5 eingeleitet, das sich dementsprechend etwas durchbiegt.

Die Wälzlager 3, 4 können praktisch nur radiale Kräfte aufnehmen. Sie weisen ballige Rollen 7 zwischen Innenkäfig 8 und Außenkäfig 9 auf. Die Rollen haben eine relativ große Länge. Der Laufbahnradius von Innenring und Außenring ist wesentlich größer als der von herkömmlichen Pendelrollenlagern. Derartige Wälzlager 3, 4 sind unter der Bezeichnung CARB von der Firma SKF erhältlich. Sie können, wie ein normales Pendelrollenlager auch, Fluchtungsfehler ausgleichen und Radialbelastungen aufnehmen. Sie können aber auch Axialverschiebungen des Walzenmantels 2 gegenüber dem Querhaupt 5 wie ein Zylinderrollenlager ausgleichen. Derartige Wälzlager 3, 4 weisen also eine relativ große Winkelbeweglichkeit und eine relativ große axiale Einstellbarkeit auf. Allerdings können sie praktisch keine axialen Kräfte übernehmen. Dementsprechend wird die axiale Lagerung des Walzenmantels 2 gegenüber dem Querhaupt 5 durch eine hydrostatische Lageranordnung 10 sichergestellt. Die Lageranordnung 10 weist eine Scheibe 11 auf, die mit dem Walzenmantel 2 axial und in Drehrichtung fest verbunden ist. Am Querhaupt 5 ist eine Kolben-Zylinder-Anordnung axial festgelegt, die einen Kolben 12 und einen Zylinder 13 aufweist. Der Kolben 12 ist als Ringkolben ausgebildet. Er ist im Zylinder 13 abgedichtet gelagert und in Axialrichtung beweglich. Der Zylinder 13 ist in einem Gehäuse 14 angeordnet. Der Kolben 12 kann mit Hilfe einer zwischen ihm und dem Gehäuse 14 angeordneten Feder 24 in Richtung auf die Scheibe 11 vorgespannt sein, um einen Spalt zwischen Scheibe 11 und Kolben 12 einzustellen. Bei richtiger Auslegung der Federkraft stellt sich eine optimale Spaltgröße ein. Der Kolben 12 liegt mit seiner Stirnseite an einer Stützfläche 15 der Scheibe 11 an. An der in Axialrichtung gegenüberliegenden Stützfläche 16 liegt ein radialer Vorsprung 17 des Gehäuses 14 an. Dementsprechend wird die Scheibe 11 zangenartig vom Kolben 15 und dem Vorsprung 17 des Gehäuses 14 umgriffen. In den an den Stützflächen 15, 16 anliegenden Flächen von Kolben 12 und Vorsprung 17 sind Lagertaschen 18, 19 angeordnet, die über eine Leitung 20 mit Hydraulikflüssigkeit versorgt werden können. Die Leitung 20 versorgt auch den Zylinder 13. Zwischen den Lagertaschen 18, 19 und der Leitung 20 sind in nicht näher dargestellter Weise Drosseln angeordnet, so daß die Lageranordnung 10 als hydrostatische Lagerung wirkt. Die durch die Leitung 20 herangeführte Hydraulikflüssigkeit fließt durch einen Spalt zwischen dem Kolben 12 und der Stützfläche 15 bzw. durch einen Spalt zwischen dem Vorsprung 17 und der Stützfläche 16 ab. Hierbei stellt sich ein Gleichgewicht derart ein, daß die Scheibe 11 einen Abstand sowohl vom Kolben 12 als auch vom Vorsprung 17 aufweist. Dieser Abstand wird aufgrund des im Zylinder 13 herrschenden Drucks so klein wie möglich gehalten. Er ist aber vorhanden. Durch die hydrostatische Schmierung wird der Verschleiß klein gehalten.

Das Gehäuse 14 ist zwar drehfest und in Axialrichtung unbeweglich auf dem Querhaupt angeordnet. Es weist jedoch eine ballig angeordnete Lagerfläche 21 auf, die von zwei O-Ringen 22, 23 begrenzt ist, so daß eine kleine Kippbewegung des Gehäuses 14 gegenüber dem Querhaupt 5 möglich ist. Es ist also gewährleistet, daß sich auch bei einer Durchbiegung des Querhauptes 5 immer eine planparallele Anlage der Kolbenstirnfläche beziehungsweise der Stirnfläche des Vorsprungs 17 an die Stützflächen 15, 16 der Scheibe 11 ergibt.

Das Wälzlager 3, in dessen Nachbarschaft sich die Lageranordnung 10 befindet, bildet im vorliegenden Ausführungsbeispiel das Festlager. Das andere Wälzlager 4 ist dementsprechend das Loslager. Hier ist eine axiale Bewegung zwischen dem Querhaupt 5 und dem Walzenmantel 2 zugelassen.

Fig. 2 zeigt eine andere Ausgestaltung einer Walze 1', bei der gleiche Teile mit gleichen Bezugszeichen versehen sind.

Auch hier ist das Wälzlager 3 im Bereich des Festlagers angeordnet, während das Wälzlager 4 das Loslager bildet.

Die hydrostatische Lageranordnung besteht bei dieser Ausgestaltung aus zwei relativ weit voneinander entfernten Teilen, nämlich einer Stützschuhanordnung 31 axial innen neben dem Wälzlager 3 und einer Kolben-Zylinder-Anordnung 32 axial innen neben dem Wälzlager 4. Die Wälzlager 3,4 sind genauso aufgebaut wie bei der Ausgestaltung nach Fig. 1.

Die Stützschuhanordnung 31 weist eine kugelkalottenförmige Basis 33 auf, die in Axialrichtung und in Drehrichtung ortsfest auf dem Querhaupt 5 angeordnet ist. Die Basis 33 unterstützt einen Stützschuh 34, der in seiner in Axialrichtung gesehen rechten Stirnseite eine hydrostatische Lagertasche 35 aufweist. Mit der Stirnseite liegt er an einer Stützfläche 36 einer Ringscheibe 37 an, die drehfest und in Axialrichtung ortsfest mit dem Walzenmantel 2 verbunden ist. Auch hier kann zwischen dem Gehäuse 38 und dem Kolben 40 eine Feder 45 angeordnet sein.

Die Kolben-Zylinder-Anordnung 32 weist ein Gehäuse 38 auf, das drehfest und in Axialrichtung ortsfest auf dem Querhaupt 5 angeordnet ist. Im Gehäuse 38 ist ein Zylinder 39 angeordnet, in dem sich ein Kolben 40, der ebenfalls als Ringkolben ausgebildet ist, in Axialrichtung bewegen kann. Der Kolben 40 weist an seiner in Axialrichtung gesehen linken Stirnseite eine hydrostatische Lagertasche 41 auf und liegt mit senier Stirnseite an einer Stützfläche 42 einer Ringscheibe 43 an, die drehfest und in Axialrichtung fest mit dem Walzenmantel 2 verbunden ist. Auch hier kann zwischen dem Gehäuse 38 und dem Kolben 40 eine Feder 49 angeordnet sein.

Die Kolben-Zylinder-Anordnung 32 und die Stützschuhanordnung 31 umgreifen also die beiden Ringscheiben 37, 43 ebenfalls zangenartig.

Der Zylinder 39 wird durch Hydraulikflüssigkeit, die durch eine Leitung 44 herangeführt wird, unter Druck gesetzt. Der Kolben 40 weist eine Verbindungsleitung 45 zwischen Drucktasche 41 und Zylinder 39 auf, so daß auch die Lagertasche 41 mit Hydraulikflüssigkeit unter Druck versorgt wird. Die Leitung 44 versorgt auch die Lagertasche 35 im Stützschuh.

Die Funktionsweise ist die gleiche wie bei der Ausgestaltung in Fig. 1. Auch hier muß der Kolben 40 im Zylinder 39 eine größere axiale Beweglichkeit aufweisen, weil er die gesamte Längenänderung des Walzenmantels 2 ausgleichen können muß.

Die hydrostatische Lageranordnung 31, 32 dient bei dieser Ausgestaltung zusätzlich dazu, den Innenraum 46 des Walzenmantels 2 axial nach außen abzudichten.

Hierzu ist sowohl der Stützschuh 34 über Dichtungsringe 47 als auch das Gehäuse 38 über Dichtungsringe 48 auf dem Querhaupt 5 befestigt. Diese Dichtungsringe werden in den meisten Fällen zwar nicht vollständig verhindern können, daß Hydraulikflüssigkeit aus dem Innenraum 46 entweicht. Sie verhindert aber, daß sich im Innenraum 46 ein Druckverlust ergibt. Ein Entweichen des Drucks zwischen den Berührungsflächen von Stützschuh 34 und Ringscheibe 37 beziehungsweise Kolben 40 und Ringscheibe 43 ist nicht möglich, weil hier der Druck in den Lagertaschen 41 entgegensteht.

Aufgrund der kugelkalottenförmigen Lagerfläche der Basis 33 und der entsprechend angepaßten Lagerfläche des Stützschuhs 34 ist auf dieser Seite der hydrostatischen Lageranordnung ebenfalls eine Kippbeweglichkeit des Stützschuhs 34 gegenüber dem Querhaupt 5 gegeben, so daß sich das Querhaupt etwas durchbiegen kann, ohne daß die planparallele Ausrichtung der die hydrostatische Lagertasche 35 aufweisenden Fläche an der Stützfläche 36 der Ringscheibe 37 aufgegeben wird.

Im Bereich der Kolben-Zylinder-Anordnung 32 kann die parallele Ausrichtung dadurch beibehalten werden, daß der Kolben 40 etwas im Zylinder 39 schief gestellt werden kann.

Bei den Ausführungsformen der Fig. 1 und 2 ist der Walzenmantel 2 zum Querhaupt 5 zentriert. Derartige Walzen werden auch als C-Typ-Walzen bezeichnet. In diesem Fall sind die Wälzlager 3, 4 unmittelbar auf dem Querhaupt 5 befestigt.

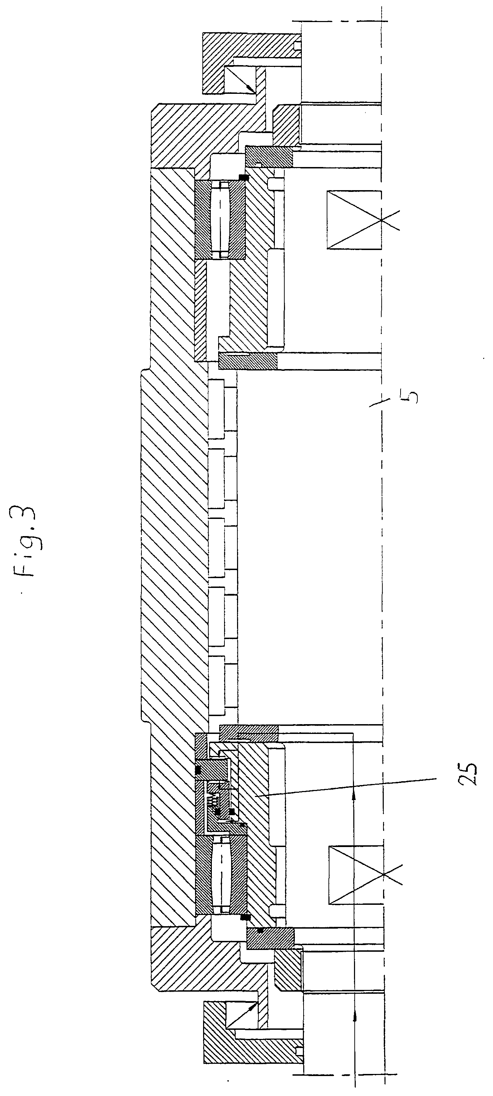

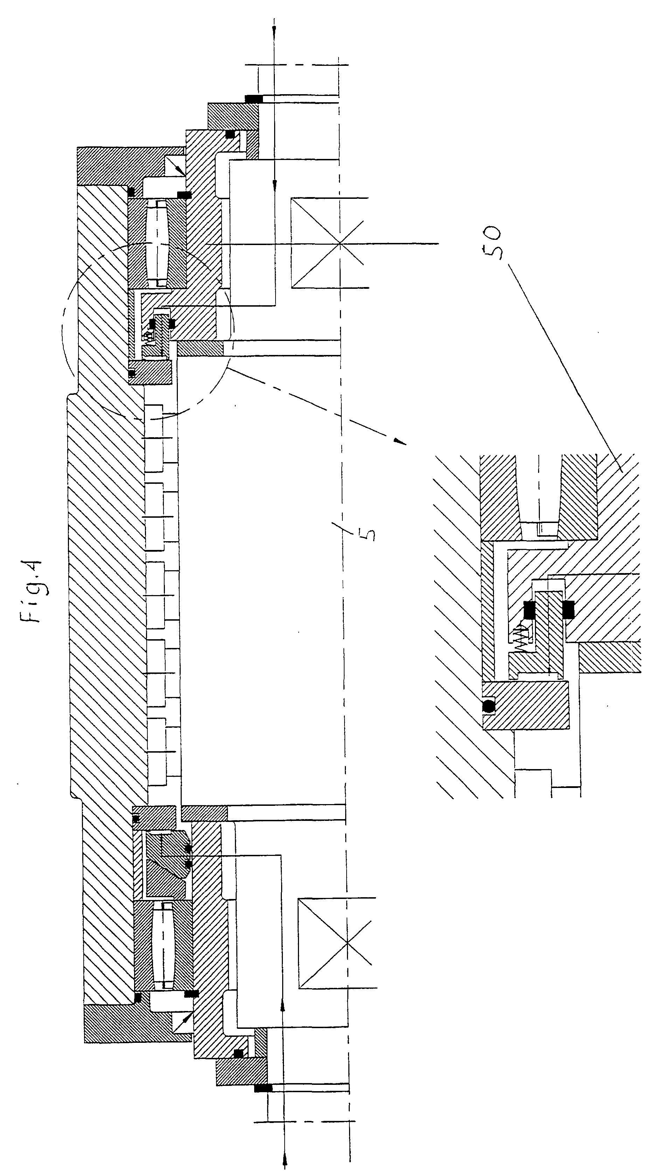

Die hydrostatische Axiallagerung läßt sich aber auch bei Walzen mit Mantelhub, sogenannten F-Typ-Walzen, einsetzen, wie die Fig. 3 und 4 zeigen. Hierbei entspricht die Ausgestaltung nach Fig. 3 weitgehend der nach Fig. 1. Die Ausgestaltung nach Fig. 4 entspricht weitgehend der nach Fig. 2.

Bei der Ausgestaltung nach Fig. 3 sind die Wälzlager 3, 4 und die Lageranordnung 10 (Fig. 1) nicht mehr unmittelbar auf dem Querhaupt 5 befestigt, sondern auf einem Lagerring 25, der das Querhaupt umgibt. In an sich bekannter Weise ist das Querhaupt an den axialen Positionen, wo der Lagerring oder -träger 25 angeordnet ist, parallel zur Hubrichtung abgeflacht. Der Lagerring 25 weist entsprechend ebene Führungsflächen auf, so daß er, bezogen auf die Darstellung der Fig. 3, nach oben und nach unten verschoben werden kann. Wenn der Lagerring 25 gegenüber dem Querhaupt 5 neigbar ist, was vielfach der Fall sein wird, dann kann man auf die ballige Form des Gehäuses 14 verzichten und das Gehäuse 14 unmittelbar auf dem Lagerring 25 anordnen.

In ähnlicher Weise kann man die Lageranordnung 32 (gleiches gilt für die Lager 3, 4) entsprechend Fig. 2 nicht nur unmittelbar auf dem Querhaupt 5 anordnen, wie das in Fig. 2 dargestellt ist, sondern auch auf einem Lagerring oder -träger 50, der, bezogen auf die Darstellung der Fig. 4, nach oben und nach unten gegenüber dem Querhaupt 5 verschiebbar ist.

Mit der Verschiebung der Lagerringe 25 bzw. 50 kann der Walzenmantel 2 insgesamt gegenüber dem Querhaupt 5 angehoben oder abgesenkt werden, und zwar unter der Wirkung der Stützelemente 6.

## Patentansprüche

1. Durchbiegungseinstellwalze (1) mit einem Walzenmantel (2), der über als Radiallager ausgebildete Wälzlager (3, 4) drehbar auf einem Querhaupt abgestützt ist, wobei in Axialrichtung eine hydrostatische Lageranordnung (10; 31, 32) wirkt, **dadurch gekennzeichnet, daß** die hydrostatische Lageranordnung (10; 31, 32) axial innen neben einem oder bei den Wälzlagern (3, 4) angeordnet ist, und nur sie die axialen Kräfte aufnimmt.

2. Walze nach Anspruch 1, **dadurch gekennzeichnet, daß** die Lageranordnung (10; 31, 32) eine erste axialgerichtete Stützfläche (15; 42), die mit einer Kolben-Zylinder-Anordnung (12-14; 32) zusammenwirkt, und eine entgegengesetzt gerichtete zweite Stützfläche (16), die mit einem Stützschuh (17; 34) zusammenwirkt, der gegenüber dem Querhaupt (5) in Axialrichtung festgelegt ist, aufweist.

3. Walze nach Anspruch 2, **dadurch gekennzeichnet, daß** die Kolben-Zylinder-Anordnung einen Ringkolben (12; 40) aufweist, der das Querhaupt (5) umgibt.

4. Walze nach Anspruch 2 oder 3, **dadurch gekennzeichnet, daß** der Kolben (12; 40) und der Stützschuh (17; 34) Lagertaschen (18, 19; 35, 41 aufweisen, die mit der gleichen Druckquelle (20; 44) in Verbindung stehen.

5. Walze nach einem der Ansprüche 2 bis 4, **dadurch gekennzeichnet, daß** die Stützflächen (15, 16; 36, 42) am Walzenmantel (2) und die Kolben-Zylinder-Anordnung (12-14; 32) und der Stützschuh (17; 34) am Querhaupt (5) angeordnet sind.

6. Walze nach einem der Ansprüche 1 bis 5, **dadurch gekennzeichnet, daß** die Lageranordnung (10) eine auf beiden axialen Seiten beaufschlagte Scheibe (11) aufweist.

7. Walze nach einem der Ansprüche 2 bis 5, **dadurch gekennzeichnet, daß** die Lageranordnung (31, 32) an einem Walzenende eine erste Ringscheibe (37) und am anderen Walzenende eine zweite Ringscheibe (43) aufweist, die mit dem Kolben (40) beziehungsweise dem Stützschuh (34) zusammenwirken.

8. Walze nach Anspruch 7, **dadurch gekennzeichnet, daß** der Kolben (40) und der Stützschuh (34) axial von außen auf die Ringscheiben (37, 43) wirken.

9. Walze nach Anspruch 8 **dadurch gekennzeichnet, daß** die Ringscheiben (37, 43) zusammen mit dem Stützschuh (34) beziehungsweise der Kolben-Zylinder-Anordnung (32) eine Axialdichtung bilden.

10. Walze nach einem der Ansprüche 2 bis 9, **dadurch gekennzeichnet, daß** der Stützschuh (17; 34) und/oder die Kolben-Zylinder-Anordnung (12-14; 32) gegenüber dem Querhaupt (5) kippbeweglich sind.

## Claims

1. Controlled deflection roll (1) having a roll shell (2) which is supported on a yoke such that it can rotate via antifriction bearings (3, 4) formed as radial bearings, a hydrostatic bearing arrangement (10; 31, 32) acting in the axial direction, **characterized in that** the hydrostatic bearing arrangement (10; 31, 32) is arranged axially on the inside beside one or both antifriction bearings (3, 4) and only it absorbs the axial forces.

2. Roll according to Claim 1, **characterized in that** the bearing arrangement (10; 31, 32) has a first axially oriented supporting surface (15; 42) which interacts with a piston-cylinder arrangement (12-14; 32), and an oppositely oriented second supporting surface (16) which interacts with a supporting shoe (17; 34) which is fixed in the axial direction with respect to the yoke (5).

3. Roll according to Claim 2, **characterized in that** the piston-cylinder arrangement has an annular piston (12; 40) which surrounds the yoke (5).

4. Roll according to Claim 2 or 3, **characterized in that** the piston (12; 40) and the supporting shoe (17; 34) have bearing pockets (18, 19; 35, 41) which are connected to the same pressure source (20; 44).

5. Roll according to one of Claims 2 to 4, **characterized in that** the supporting surfaces (15, 16; 36, 42) on the roll shell (2) and the piston-cylinder arrangement (12-14; 32) and the supporting shoe (17; 34) are arranged on the yoke (5).

6. Roll according to one of Claims 1 to 5, **characterized in that** the bearing arrangement (10) has a disc (11) loaded on both axial sides.

7. Roll according to one of Claims 2 to 5, **characterized in that** the bearing arrangement (31, 32) has a first annular disc (37) at one end of the roll and a second annular disc (43) at the other end of the roll, which interact with the piston (40) and, respectively, the supporting shoe (34).

8. Roll according to Claim 7, **characterized in that** the piston (40) and the supporting shoe (34) act on the annular discs (37, 43) axially from the outside.

9. Roll according to Claim 8, **characterized in that** the annular discs (37, 43), together with the supporting shoe (34) and, respectively, the piston-cylinder arrangement (32), form an axial seal.

10. Roll according to one of Claims 2 to 9, **characterized in that** the supporting shoe (17; 34) and/or the piston-cylinder arrangement (12-14; 32) can tilt with respect to the yoke (5).

## Revendications

1. Rouleau avec compensation de la déflection (1) comprenant une enveloppe de rouleau (2) qui est supportée à rotation sur une traverse par le biais de paliers à roulement (3, 4) réalisés sous forme de paliers radiaux, un agencement de palier hydrostatique (10 ; 31, 32) agissant dans la direction axiale, **caractérisé en ce que** l'agencement de palier hydrostatique (10 ; 31, 32) est disposé axialement à l'intérieur à côté d'un ou au niveau des paliers à roulement (3, 4), et lui seul supporte les forces axiales.

2. Rouleau selon la revendication 1, **caractérisé en ce que** l'agencement de palier (10 ; 31, 32) présente une première surface d'appui (15 ; 42) orientée axialement, qui coopère avec un agencement cylindre-piston (12-14 ; 32), et une deuxième surface d'appui (16) orientée à l'opposé, qui coopère avec un patin de support (17 ; 34) qui est fixé dans la direction axiale par rapport à la traverse (5).

3. Rouleau selon la revendication 2, **caractérisé en ce que** l'agencement cylindre-piston présente un piston annulaire (12 ; 40) qui entoure la traverse (5).

4. Rouleau selon la revendication 2 ou 3, **caractérisé en ce que** le piston (12 ; 40) et le patin de support (17 ; 34) présentent des poches de palier (18, 19 ; 35, 41) qui sont en liaison avec la même source de pression (20 ; 44).

5. Rouleau selon l'une quelconque des revendications 2 à 4, **caractérisé en ce que** les surfaces d'appui (15, 16 ; 36, 42) sont disposées sur l'enveloppe de rouleau (2), et l'agencement cylindre-piston (12-14 ; 32) et le patin de support (17 ; 34) sont disposés sur la traverse (5).

6. Rouleau selon l'une quelconque des revendications 1 à 5, **caractérisé en ce que** l'agencement de palier (10) présente un disque (11) sollicité des deux côtés axiaux.

7. Rouleau selon l'une quelconque des revendications 2 à 5, **caractérisé en ce que** l'agencement de palier (31, 32) présente, à une extrémité du rouleau, un premier disque annulaire (37) et à l'autre extrémité du rouleau, un deuxième disque annulaire (43) qui coopèrent avec le piston (40), respectivement avec le patin de support (34).

8. Rouleau selon la revendication 7, **caractérisé en ce que** le piston (40) et le patin de support (34) agissent axialement depuis l'extérieur sur les disques annulaires (37, 43).

9. Rouleau selon la revendication 8, **caractérisé en ce que** les disques annulaires (37, 43) forment conjointement avec le patin de support (34) respectivement l'agencement cylindre-piston (32), un joint axial.

10. Rouleau selon l'une quelconque des revendications 2 à 9, **caractérisé en ce que** le patin de support (17 ; 34) et/ou l'agencement cylindre-piston (12-14 ; 32) peuvent être basculés par rapport à la traverse (5).
